# EUROPÄISCHE PATENTANMELDUNG

(11) **EP 4 353 916 A1**
(43) Veröffentlichungstag der Anmeldung: **17.04.2024**
(21) Anmeldenummer: 22201354.2
(22) Anmeldetag: 13.10.2022
(51) Int. Cl.: E03D 1/012, E03D 5/02

(54) **BETÄTIGUNGSVORRICHTUNG**

(71) Anmelder: Geberit International AG, 8645 Jona (CH)
(72) Erfinder: MONTANI, Nathalia, 8645 Jona (CH)
(74) Vertreter: Frischknecht, Harry Ralph

(57) **Zusammenfassung**

Eine Betätigungsvorrichtung (1) zum Auslösen einer Spülung eines Sanitärartikels umfasst eine Betätigungsplatte (2), die mindestens ein Betätigungselement (3) und mindestens eine plattenseitige Befestigungsstruktur (4) umfasst, und ein Lagerelement (5), das mindestens eine lagerelementseitige Befestigungsstruktur (6) umfasst. Die Betätigungsplatte (2) ist über die Verbindung der plattenseitigen Befestigungsstruktur (4) mit der lagerelementseitigen Befestigungsstruktur (6) zum Lagerelement (5) befestigbar. Das Lagerelement (5) umfasst mehrere seitlich vom Lagerelement (5) abstehende Lagerlaschen (7), mit welchen das Lagerelement (5) an einer Wandfläche (W) einer Gebäudewand abgestützt werden kann.

## Beschreibung

### TECHNISCHES GEBIET

Die vorliegende Erfindung betrifft eine Betätigungsvorrichtung zum Auslösen einer Spülung eines Sanitärartikels nach Anspruch 1 sowie eine Anordnung nach Anspruch 16 und ein Verfahren nach Anspruch 18.

### STAND DER TECHNIK

Aus dem Stand der Technik sind Betätigungsvorrichtungen zum Auslösen einer Spülung eines Sanitärartikels, wie einer Toilette oder eines Urinals, bekannt geworden. Die EP 2 388 380 offenbart als Beispiel eine derartige Betätigungsvorrichtung. Die hier offenbarte Betätigungsvorrichtung umfasst eine Betätigungsplatte mit mindestens einer Taste zur Spülauslösung.

Aus der DE 86 177 85 U ist eine weitere Betätigungsvorrichtung bekannt geworden. Hier ist vor einer Wandöffnung ein Halterahmen angeordnet und die Betätigungsplatte wird mit diesem Halterahmen verbunden. Der Halterahmen ist an einer Wandfläche einer Wandplattierung abgestützt und die Betätigungsplatte überdeckt den Halterahmen.

Die DE 86 177 85 U weist den Nachteil auf, dass der allgemeine Aufbau über den Halterahmen und die Betätigungsplatte eine Struktur geschaffen wird, die sich in einem verhältnismässig grossen Überstand von der Wandfläche weg erstreckt.

### DARSTELLUNG DER ERFINDUNG

Der vorliegenden Erfindung liegt die Aufgabe zugrunde, eine Betätigungsvorrichtung anzugeben, welche die Nachteile des Standes der Technik überwindet. Insbesondere ist es eine Aufgabe der vorliegenden Erfindung, eine Betätigungsvorrichtung anzugeben, deren Überstand über die Wandfläche reduziert werden kann.

Diese und andere Aufgaben löst die Betätigungsvorrichtung nach Anspruch 1. Demgemäss umfasst eine Betätigungsvorrichtung zum Auslösen einer Spülung eines Sanitärartikels eine Betätigungsplatte und ein Lagerelement. Die Betätigungsplatte umfasst mindestens ein Betätigungselement und mindestens eine plattenseitige Befestigungsstruktur. Das Lagerelement umfasst mindestens eine lagerelementseitige Befestigungsstruktur. Die Betätigungsplatte ist über die Verbindung der plattenseitigen Befestigungsstruktur mit der lagerelementseitigen Befestigungsstruktur zum Lagerelement befestigbar. Das Lagerelement umfasst weiter mehrere seitlich vom Lagerelement abstehende Lagerlaschen, mit welchen das Lagerelement an einer Wandfläche einer Gebäudewand abgestützt werden kann.

Die Lagerlaschen sorgen dafür, dass der Überstand des Lagerelements gegenüber aus dem Stand der Technik bekannten Lagerelementen kleiner wird, wodurch auch die Aufbauhöhe der Betätigungsplatte reduziert werden kann.

Unter einer Lagerlasche wird eine Struktur verstanden, welche nur eine geringe Dicke aufweist. Die Lagerlasche ist derart angeordnet, dass diese mit einem der beiden grössten Flächenbereiche an der Wandfläche abgestützt wird, das heisst mit der Wand in Kontakt kommt.

In einer ersten Ausführungsform sind die Lagerlaschen aus einem anderen Material als das Lagerelement. Besonders bevorzugt ist die mechanische Festigkeit des Materials der Lagerlaschen grösser als die mechanische Festigkeit des Materials des Lagerelements. Mit anderen Worten gesagt, kann die Lagerlasche im Vergleich zu einem Material mit geringerer Festigkeit dünner ausgebildet sein.

In einer ersten Variante sind die Lagerlaschen über einen Befestigungsabschnitt fest im Lagerelement eingeformt und ragen mit einem Lagerabschnitt vom Lagerelement ab. Das heisst, dass die Lagerlaschen an ihrem Befestigungsabschnitt vollständig durch das Material des Lagerelements umschlossen sind. In einer zweiten Variante sind die Lagerlaschen über einen Befestigungsabschnitt fest am Lagerelement angeformt und ragen mit einem Lagerabschnitt vom Lagerelement ab. Das heisst, dass der Befestigungsabschnitt nur teilweise durch das Material des Lagerelements umschlossen ist. In einer dritten Variante sind die Lagerlaschen über einen Befestigungsabschnitt fest mit dem Lagerelement verbunden und ragen mit einem Lagerabschnitt vom Lagerelement ab. Die feste Verbindung kann durch eine stoffschlüssige und/oder formschlüssige und/oder eine kraftschlüssige Verbindung bereitgestellt werden.

Die drei Varianten können an einem Lagerelement einzeln oder auch gemeinsam eingesetzt werden.

Vorzugsweise verläuft der Befestigungsabschnitt in einem Winkel winklig geneigt zum Lagerabschnitt. Der Winkel liegt zwischen 45° und 135°, insbesondere bei 90°. Vorzugsweise ist der Lagerabschnitt länger als der Befestigungsabschnitt.

Die Lagerlasche an sich ist einstückig ausgebildet. Wenn der Befestigungsabschnitt winklig geneigt zum Lagerabschnitt verläuft, so weist die Lagelasche eine Biegestelle auf, von welcher sich der Befestigungsabschnitt und der Lagerabschnitt in zwei unterschiedliche Richtung weg erstrecken.

Vorzugsweise sind die Lagerlaschen aus Metall, insbesondere in der Form eines Blechstreifens, insbesondere aus rostfreiem Stahl, oder aus einem faserverstärktem Kunststoff. Vorzugsweise ist das Lagerelement aus Kunststoff, insbesondere aus einem thermoplastischen Kunststoff, wie beispielsweise Acrylnitril-Butadien-Styrol.

Wenn die Lagerlaschen aus Metall oder aus dem faserverstärkten Kunststoff im Lagerelement aus Kunststoff eingeformt sind, sind die Lagerlaschen über den jeweiligen Befestigungsabschnitt vom Kunststoff umschlossen und die Lagerlaschen ragen mit dem jeweiligen Lagerabschnitt aus dem Kunststoff heraus.

In einer alternativen Ausführungsform sind die Lagerlaschen einstückig am Lagerelement angeformt, wobei Lagerlaschen und Lagerelement aus dem gleichen Material sind.

Nachfolgend werden optionale Merkmale für alle hierin beschriebenen Ausführungsformen beschrieben:
Vorzugsweise weisen die Lagerlaschen eine Dicke im Bereich von 0.25 Millimetern bis 1 Millimetern, insbesondere im Bereich von 0.5 Millimetern bis 1 Millimetern auf.

Vorzugsweise weisen die Lagerlaschen eine frei vom Lagerelement wegstehende Länge im Bereich von 5 Millimetern bis 20 Millimetern, insbesondere im Bereich von 10 Millimetern bis 15 Millimetern, auf. Das heisst, dass der oben beschriebene Lagerabschnitt mit dieser Länge vom Lagerelement wegsteht.

Vorzugsweise weisen die Lagerlaschen eine Breite im Bereich von 5 Millimetern bis 12 Millimetern, insbesondere im Bereich von 7 Millimetern bis 10 Millimetern aufweisen.

Die Wahl der oben genannten Bereiche erlaubt die Bereitstellung einer mechanisch festen Lagerlasche, welche für eine gute Abstützung sorgt.

Vorzugsweise ist die frei vom Lagerelement wegstehende Länge der Lagerlasche grösser als die Breite der Lagerlasche. Besonders bevorzugt ist die frei vom Lagerelement wegstehende Länge der Lagerlasche um einen Faktor im Bereich 1,2 bis 2,5 grösser ist als die Breite der Lagerlasche.

Vorzugsweise weist das Lagerelement vier Seitenflächen auf, wobei jeder Seitenfläche mindestens eine Lagerlasche zugeordnet ist, welche seitlich zu den Seitenflächen gesehen vom Lagerelement weg ragen. Besonders bevorzugt sind pro Seitenfläche jeweils zwei Lagerlaschen vorhanden, wobei die Lagerlaschen vorzugsweise in den Endbereichen der Seitenflächen liegen. Die Endbereiche sind bevorzugt die Bereiche der Seitenflächen, welche nahe zu einer benachbarten Seitenfläche liegen.

Vorzugsweise stehen zwei benachbarte Seitenflächen in einem Winkel von jeweils 90° zueinander.

In einer besonders bevorzugten Ausführungsform ist das Lagerelement ein Lagerrahmen, welcher vier Randstege aufweist, welche eine Rahmenöffnung begrenzen, wobei von jedem der Randstege mindestens eine Lagerlasche absteht. Vorzugsweise sind pro Randsteg jeweils zwei Lagerlaschen vorhanden, wobei die Lagerlaschen vorzugsweise in den Endbereichen der Randstege liegen.

Die Endbereiche sind bevorzugt die Bereiche der Randstege, welche nahe zu einem benachbarten Randsteg liegen.

In einer besonders bevorzugten Ausführungsform sind pro Randsteg jeweils zwei Lagerlaschen vorhanden, wobei die Lagerlaschen so angeordnet sind, dass die Lagerlaschen jeweils eine Verlängerung des in die gleiche Richtung wie die Lagerlasche verlaufenden Randsteges bilden.

Vorzugsweise weist das Lagerelement eine Frontseite auf, wobei die Lagerlaschen mit einem Überstand über der Frontseite verlaufen. Der maximale Überstand ist vorzugsweise höchstens 3 Millimeter. Alternativ erstrecken sich die Lagerlaschen aus den Seitenflächen des Lagerelements vom Lagerelement weg.

Vorzugsweise ist das mindestens eine Betätigungselement mindestens eine Betätigungstaste, welche bewegbar, insbesondere verschwenkbar, in der Betätigungsplatte gelagert ist. Typischerweise ist eine grosse Betätigungstaste zur Auslösung einer Vollmengenspülung und eine kleine Betätigungstaste zur Auslösung einer Teilmengenspülung angeordnet. Alternativerweise ist das mindestens eine Betätigungselement ein in der Betätigungstaste angeordnetes Sensorfenster, hinter welchem Sensorfenster ein Erfassungssensor zur Erfassung eines Benutzers anordbar bzw. angeordnet ist.

Vorzugsweise liegt die lagerelementseitige Befestigungsstruktur innerhalb der Seitenflächen, die das Lagerelement seitlich begrenzen.

Vorzugsweise weist die Betätigungsplatte eine Ausdehnung auf, welche derart ist, dass bei montierter Betätigungsplatte das Lagerelement und die Lagerlaschen überdeckt, insbesondere vollständig überdeckt, sind. Die Überdeckung ist mindestens derart, dass mit Blick in Richtung der Flächennormalen auf die Frontfläche der Betätigungsplatte das Lagerelement und die Lagerlaschen vollständig überdeckt sind.

Vorzugsweise weist das Lagerelement mindestens eine Befestigungsöffnung auf, durch welche ein Befestigungselement hindurchgeführt werden kann, derart, dass das Lagerelement mit dem Befestigungselement zu einem Supportelement klemmbar bzw. befestigbar ist. Das Supportelement liegt typischerweise zwischen dem Lagerelement und einem Spülkasten. Das Supportelement kann auch Teil eines Spülkastens sein.

Eine Sanitäranordnung umfasst eine Betätigungsvorrichtung nach obiger Beschreibung und einen Spülkasten mit einem Spülventil, wobei die Betätigungsvorrichtung mit dem mindestens einen Betätigungselement auf das Spülventil wirkt, derart, dass bei Betätigung des Betätigungselement das Spülventil öffnenbar ist.

Eine Anordnung umfasst eine Gebäudewand mit einem Durchbruch sowie mit einer sich dem Durchbruch seitlich anschliessenden Wandfläche und eine Betätigungsvorrichtung bzw. eine Sanitäranordnung nach obiger Beschreibung, wobei die Lagerlaschen auf der Wandfläche aufliegen.

Vorzugsweise liegt das Lagerelement abgesehen von den Lagerlaschen im Wesentlichen vollständig im Wanddurchbruch und die Betätigungsplatte liegt, vorzugsweise abgesehen von der mindestens einen plattenseitigen Befestigungsstruktur, im Wesentlichen vollständig ausserhalb des Wanddurchbruchs, das heisst vor der Wandfläche. Im Wesentlichen vollständig heisst, dass weit grössere Teile des Lagerelements im Wanddurchbruch liegen und dass weit grössere Teile des Betätigungselements ausserhalb des Wanddurchbruchs liegen.

Ein Verfahren zur Herstellung eines Lagerelements mit Lagerlaschen einer Betätigungsvorrichtung nach obiger Beschreibung ist dadurch charakterisiert, dass in einem ersten Schritt die Lagerlaschen in einem Spritzgusswerkzeug platziert werden und dass in einem zweiten Schritt, der nach dem ersten Schritt folgt, Kunststoff in das Spritzgusswerkzeug eingespritzt wird, welches das Lagerelement formt.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines Lagerelements einer erfindungsgemässen Betätigungsvorrichtung nach einer Ausführungsform der vorliegenden Erfindung, wobei das Lagerelement auf einem Supportelement aufliegt;
- Fig. 2: eine perspektivische Ansicht eines Lagerelements nach Figur 2;
- Fig. 3: eine Draufsicht auf das Lagerelement nach Fig. 3;
- Fig. 4: eine perspektivische Schnittdarstellung des Lagerelements gemäss den vorhergehenden Figuren in Einbaulage;
- Fig. 5: eine Schnittdarstellung einer Anordnung mit einem Lagerelement gemäss den vorhergehenden Figuren;
- Fig. 6: eine Schnittdarstellung gemäss Figur 5 mit der Betätigungsplatte; und
- Fig. 7: eine weitere Schnittdarstellung der Ausführungsform der vorhergehenden Figuren.

### BESCHREIBUNG BEVORZUGTER AUSFÜHRUNGSFORMEN

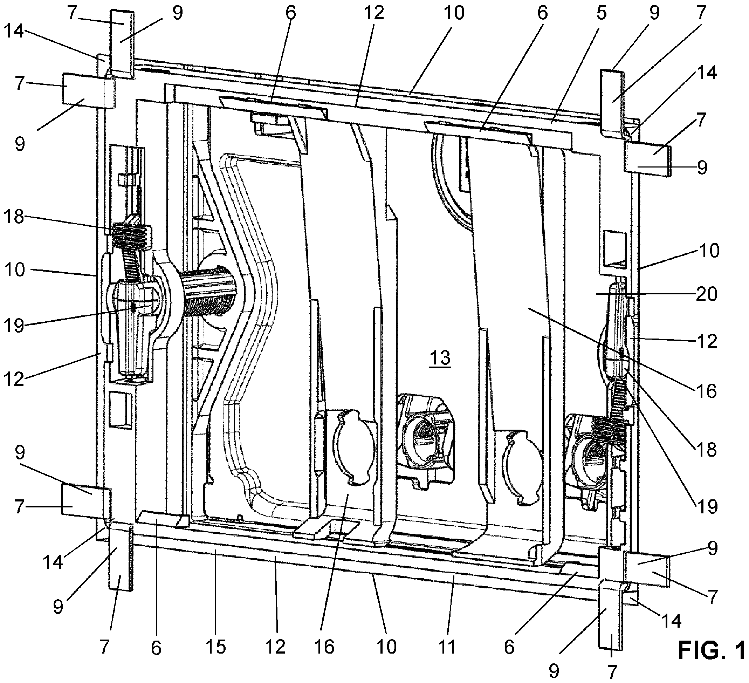

Die Figuren 1 bis 7 zeigen unterschiedliche Ansichten einer erfindungsgemässen Betätigungsvorrichtung nach einem bevorzugten Ausführungsbeispiel.

Die Betätigungsvorrichtung 1 zum Auslösen einer Spülung eines Sanitärartikels umfasst eine Betätigungsplatte 2 und ein Lagerelement 3, an welchem die Betätigungsplatte 2 gelagert ist. Der Sanitärartikel ist beispielsweise ein Urinal oder eine Toilette. Die Betätigung der Betätigungsplatte 2 bewirkt typischerweise die Öffnung eines Spülventils in einem Spülkasten, wodurch das Spülwasser dann dem Sanitärartikel 2 abgegeben werden kann. Das Lagerelement 3 ist in Einbaulage gesehen mit Supportelement verbunden und bildet einen Support für die Betätigungsplatte 2.

Die Betätigungsplatte 2 umfasst mindestens ein Betätigungselement 3, hier zwei Betätigungselemente 3, und mindestens eine plattenseitige Befestigungsstruktur 4. Das mindestens eine Betätigungselement 3 ist in der gezeigten Ausführungsform als schwenkbare Betätigungstaste ausgebildet. Es ist aber auch denkbar, dass das Betätigungselement 3 ein Sensorfenster in der Betätigungsplatte 2 ist.

Das Lagerelement 5 umfasst mindestens eine lagerelementseitige Befestigungsstruktur 6. Weiter weist das Lagerelement 5 in der gezeigten Ausführungsform weiterhin zwei Befestigungsöffnung 24 auf, durch welche jeweils eine Befestigungsstange 25 hindurchgeführt wird, mit welcher das Lagerelement 5 zu Supportelement befestigbar ist. Das Supportelement liegt typischerweise zwischen Spülkasten und Lagerelement.

Die plattenseitige Befestigungsstruktur 4 ist mit der lagerelementseitigen Befestigungsstruktur verbindbar. Über die Verbindung zwischen der plattenseitigen Befestigungsstruktur 4 und der lagerelementseitigen Befestigungsstruktur 6 ist die Betätigungsplatte 2 zum Lagerelement 5 befestigbar.

Das Lagerelement 5 umfasst, wie von allen Figuren ersichtlich, mehrere seitlich vom Lagerelement 5 abstehende Lagerlaschen 7. Mit den Lagerlaschen 7 kann das Lagerelement 5 an einer Wandfläche W einer Gebäudewand G abgestützt werden.

Die Lagerlaschen 7 können verschiedenartig angeordnet und ausgebildet sein. In der Folge wird eine besonders bevorzugte Ausführungsform der Lagerlaschen 7 beschrieben.

Die Lagerlaschen 7 sind vorzugsweise aus einem anderen Material als das Lagerelement 5. Vorzugsweise sind die Lagerlaschen 7 aus Metall und das Lagerelement 5 ist aus Kunststoff. Insbesondere haben die Lagerlaschen 7 die Form von Blechstreifen. In allgemeiner Weise gesagt, sind die Lagerlaschen 7 vorzugsweise aus einem stabileren Material als das Lagerelement 5.

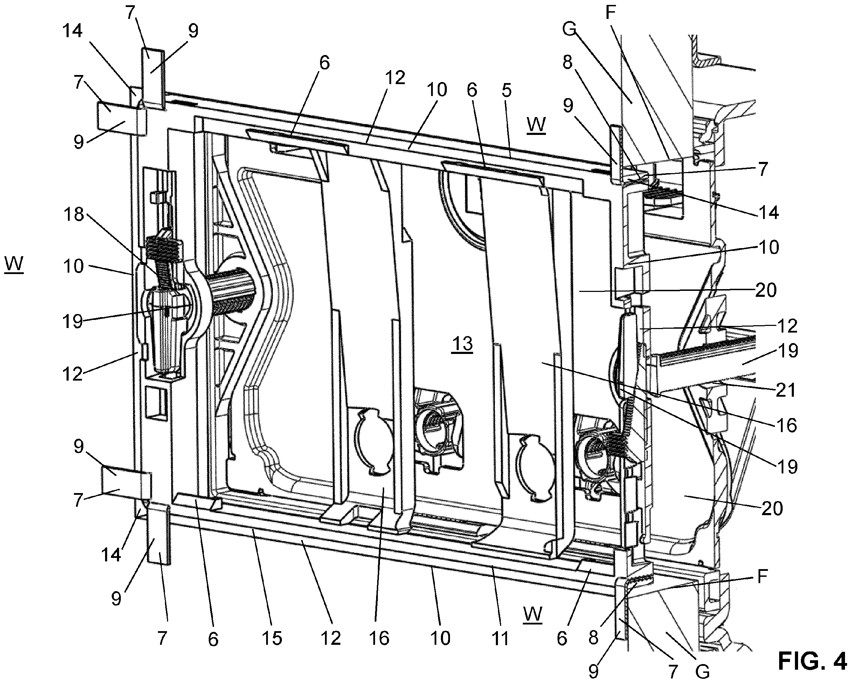

Die Lagerlaschen 7 sind in der gezeigten Ausführungsform über einen Befestigungsabschnitt 8 fest im Lagerelement 5 eingeformt. Dabei erstrecken sich die Lagerlaschen 7 in das Lagerelement 5 hinein. Die Lagerlaschen 7 ragen mit einem Lagerabschnitt 9 vom Lagerelement 5 ab. Dies wird insbesondere in der Figur 4 dargestellt. Über den abstehenden Lagerabschnitt 9 wird das Lagerelement 5 an der Wandfläche abgestützt.

In der gezeigten Ausführungsform verläuft der Befestigungsabschnitt 8 in einem Winkel winklig geneigt zum Lagerabschnitt 9. Der Winkel liegt hier bei 90°. Andere Winkel im Bereich von 45° bis 135° sind ebenfalls möglich. Die winklige Neigung zwischen Befestigungsabschnitt 8 und Lagerabschnitt 9 wird vorzugsweise durch eine Biegestelle bereitgestellt.

Von der Figur 4 kann weiterhin erkannt werden, dass die Lagerlasche 7 derart liegt, dass der Befestigungsabschnitt 8 im Wesentlichen rechtwinklig zu einer Frontseite 15 verläuft und dass der Lagerabschnitt 9 auf der Frontseite 15 aufliegt und sich über die Seitenflächen 10 des Lagerelements 5 hinweg erstreckt. Die Lagerlaschen 7 verlaufen hier demnach mit einem Überstand über der Frontseite 5. Der Überstand ist dabei möglichst klein gewählt und entspricht im Wesentlichen der Dicke D der Lagerlasche. Vorzugsweise ist der maximale Überstand höchstens 3 Millimeter.

In anderen Ausführungsformen ist es auch denkbar, dass sich die Lagerlaschen 7 aus den Seitenflächen 10 des Lagerelements 5 heraus und dann vom Lagerelement 5 weg erstrecken.

Ferner ist der Lagerabschnitt 9 in der gezeigten Ausführungsform länger ausgebildet ist der Befestigungsabschnitt 8.

Alternativerweise können die Lagerlaschen 7 aber auch einstückig mit dem Lagerelement 5 in Verbindung stehen.

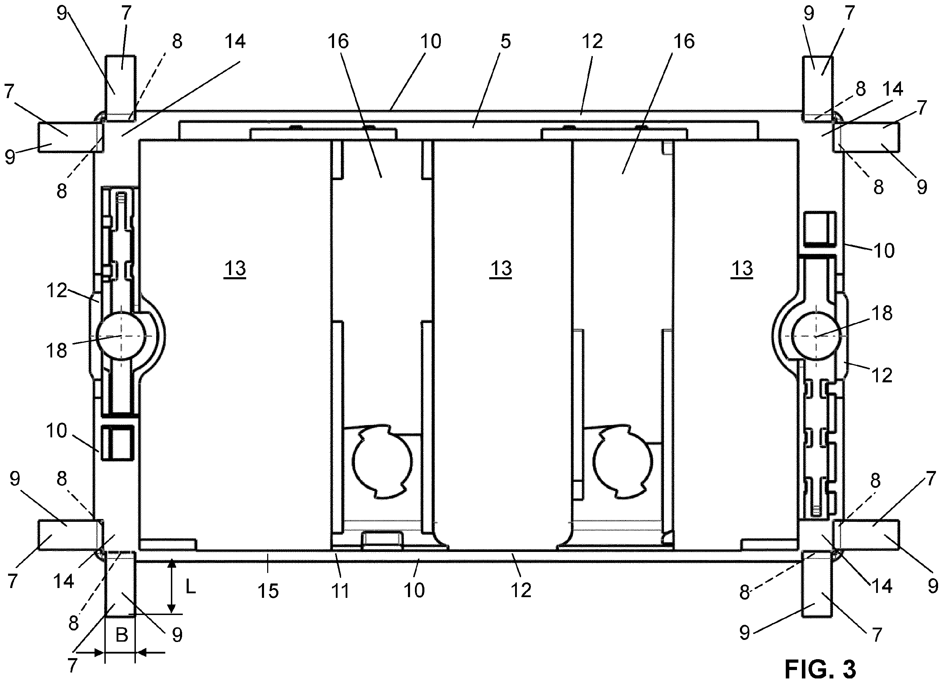

Anhand der Figur 3 werden bevorzugte Dimensionen der Lagerlaschen 7 erläutert. Die Lagerlaschen sind im Wesentlichen als dünner Quader ausgebildet. Vorzugsweise ist die frei vom Lagerelement 5 wegstehende Länge der Lagerlasche 7 grösser ist als die Breite B der Lagerlasche 7. Besonders bevorzugt ist die frei vom Lagerelement 7 wegstehende Länge L der Lagerlasche 7 um einen Faktor im Bereich 1,2 bis 2,5 grösser ist als die Breite B der Lagerlasche 7. Vorzugsweise weisen die Lagerlaschen 7 eine Dicke D im Bereich von 0.25 Millimetern bis 1 Millimetern, insbesondere im Bereich von 0.5 Millimetern bis 1 Millimetern auf. Vorzugsweise weisen die Lagerlaschen 7 eine frei vom Lagerelement 5 wegstehende Länge L im Bereich von 5 Millimetern bis 20 Millimetern, insbesondere im Bereich von 10 Millimetern bis 15 Millimetern auf. Vorzugsweise weisen die Lagerlaschen 7 eine Breite B im Bereich von 5 Millimetern bis 12 Millimetern, insbesondere im Bereich von 7 Millimetern bis 10 Millimetern auf.

Wie von der Figur 3 ersichtlich, ist das Lagerelement 5 von vorne betrachtet als Rechteck ausgebildet. In der gezeigten Ausführungsform weist das Lagerelement 5 vier Seitenflächen 10 auf. Jeder Seitenfläche 10 ist mindestens eine Lagerlasche 7 zugeordnet. Die Lagerlaschen 7 ragen dabei seitlich zu den Seitenflächen 10 vom Lagerelement weg. Dabei können sich die Lagerlaschen 7 entweder aus den Seitenflächen 10 herauserstrecken oder sie erstrecken sich wie in den Figuren gezeigt aus Frontseite 15 heraus und ragen dann seitlich zu den Seitenflächen 10 weg.

Vorzugsweise liegen die Lagerlaschen 7 jeweils in den Eckbereichen des Rechtecks. Das heisst, nahe am jeweiligen Endbereich der Seitenflächen 10. Mit anderen Worten gesagt liegen die Lagerlaschen 7 vorzugsweise in den Endbereichen 14 der Seitenflächen 10 bzw. der Randstege 12. Vorzugsweise ist jeder Seitenfläche 10 in jedem Endbereich je eine Lagerlasche 7 angeordnet. Somit sind pro Eckbereich zwei Lagerlaschen 7 vorhanden, die im Wesentlichen rechtwinklig zueinander verlaufen.

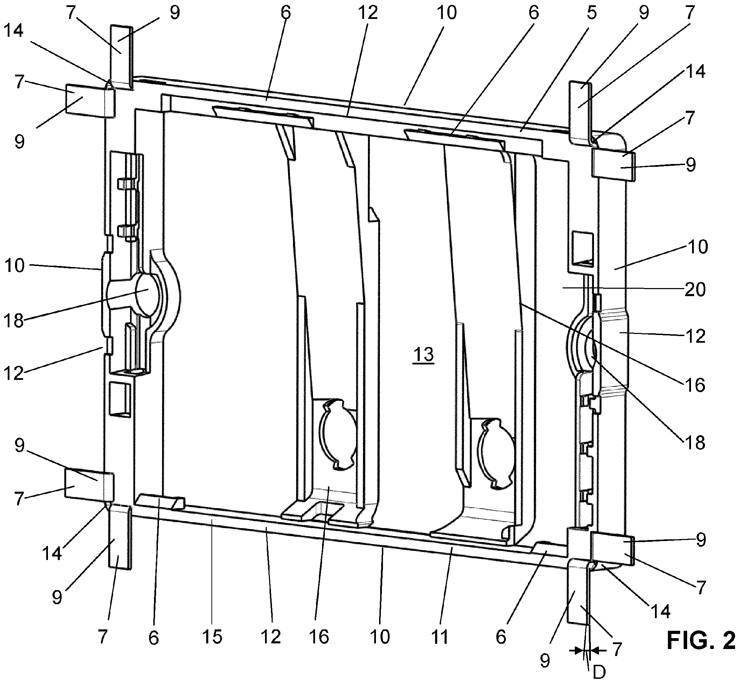

Von den Figuren 2 bis 3 ist ersichtlich, dass das Lagerelement 5 ein Lagerrahmen 11 ist. Der Lagerrahmen 11 weist vier Randstege 12 auf, welche eine Rahmenöffnung 13 begrenzen. In der Rahmenöffnung 13 sind hier zwei Stege 16 angeordnet, welche sich zwischen zwei bezüglich der Rahmenöffnung 13 gegenüberliegenden Randstegen 12 erstrecken. Von jedem der Randstege 12 steht mindestens eine Lagerlasche 7 ab. Hier sind, wie erwähnt, zwei Lagerlaschen 7 pro Randsteg 12 angeordnet. Vorzugsweise sind die Lagerlaschen 7 so angeordnet, dass die Lagerlaschen 7 jeweils eine Verlängerung des in die gleiche Richtung wie die Lagerlasche 7 verlaufenden Randsteges 12 bilden.

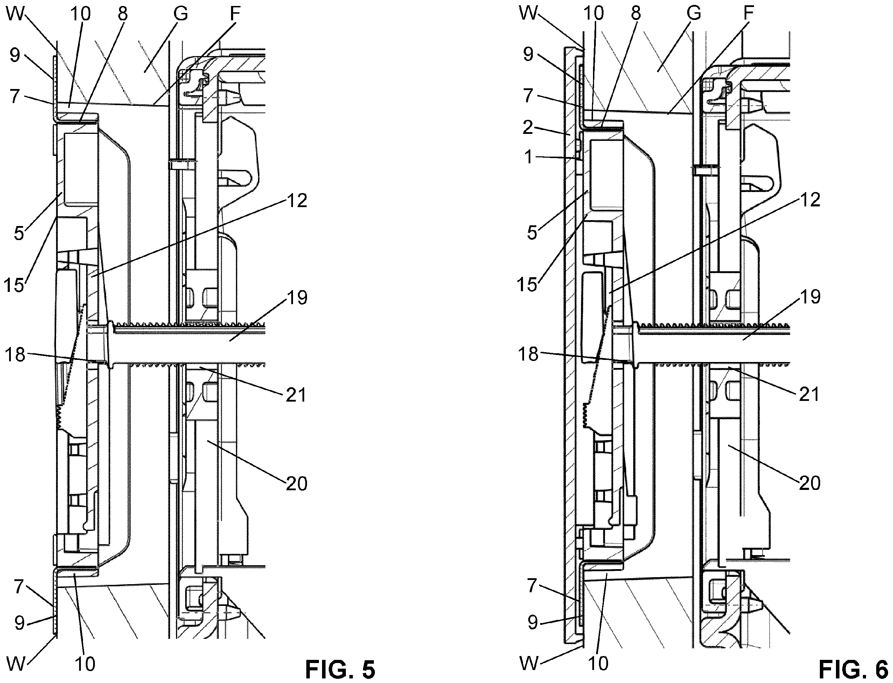

Von den Figuren 4 und 5 wird die Montage des Lagerelements 5 in einem Durchbruch F der Gebäudewand W und die Verbindung zwischen dem Lagerelement 5 und der Betätigungsplatte 2 ersichtlich. In der Figur 4 wird das Lagerelement 5 ohne Betätigungsplatte 2 und in der Figur 5 wird das Lagerelement 5 mit der Betätigungsplatte 2 gezeigt.

Das Lagerelement 5 liegt im Wesentlichen vollständig im Durchbruch F. Die Lagerlaschen 7 erstrecken sich dabei aus dem Durchbruch F heraus und liegen auf der Wandfläche W auf. Durch die geringe Dicke der Lagerlaschen 7 ist der Überstand des Lagerelements 5 bzw. der Lagerlaschen 7 über die Wandfläche W minimal. Bei entsprechend ausgebildeter Betätigungsplatte 2 kann der gesamte Überstand der Betätigungsplatte 2 von der Wandfläche sehr klein ausfallen.

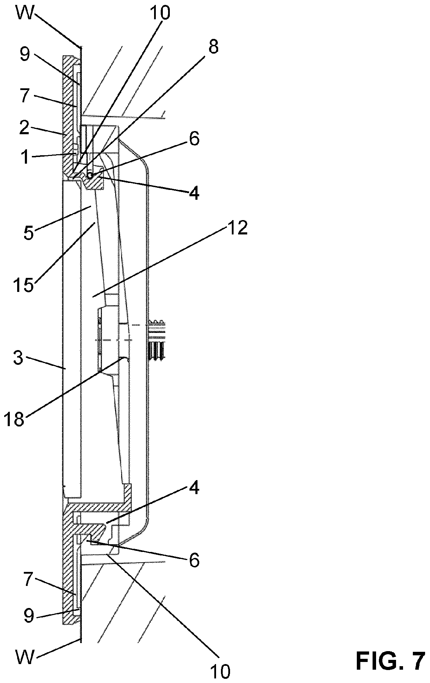

Unter Bezugnahme auf die Figur 7 werden die Befestigungsstrukturen erläutert. Die lagerelementseitige Befestigungsstruktur 6 liegt innerhalb der Seitenflächen 10, die das Lagerelement 5 seitlich begrenzen. In der gezeigten Ausführungsform liegt die lagerelementseitige Befestigungsstruktur an der Innenseite der Randstege 12, welche zur Rahmenöffnung 13 orientiert ist. Die plattenseitige Befestigungsstruktur 4 erstreckt sich von der Rückseite der Betätigungsplatte 2 weg und ragt im montierten Zustand ebenfalls in den Durchbruch F der Wand W bzw. in den Bereich der Seitenflächen 10 bzw. in die Rahmenöffnung 13 hinein. Die Befestigungsstrukturen 4, 6 sind vorzugsweise Rastelemente die ineinandergreifen. Vorzugsweise ist mindestens eines der Rastelemente elastisch federnd ausgebildet und die anderen Rastelemente sind im Wesentlichen starr ausgebildet.

In der Figur 7 wird ebenfalls gezeigt, dass das mindestens eine Betätigungselement 3 hier eine Betätigungstaste ist, welche bewegbar, insbesondere verschwenkbar in der Betätigungsplatte 2 gelagert ist. Alternativerweise ist das mindestens eine Betätigungselement ein in der Betätigungstaste angeordnetes Sensorfenster, hinter welchem Sensorfenster ein Erfassungssensor zur Erfassung eines Benutzers anordbar ist.

Von den Figuren 6 und 7 ist weiterhin ersichtlich, dass die Betätigungsplatte 2 derart ausgebildet ist, dass sich diese in Einbaulage über das Lagerelement 5 und die Lagerlaschen 7 erstreckt, so dass das Lagerelement 5 und die Lagerlaschen 7 durch die Betätigungsplatte 2 überdeckt werden. Von der Rückseite der Betätigungsplatte 2 erstreckt sich ein kleiner Rand 17, welcher in Einbaulage mit der Wandfläche W in Kontakt kommt.

Von den Figuren ist weiterhin ersichtlich, dass das Lagerelement 5 mindestens eine Befestigungsöffnung 18 aufweist, durch welche ein Befestigungselement 19 hindurchgeführt werden kann. Hier sind zwei Befestigungsöffnung 18 mit jeweils einem Befestigungselement 19 angeordnet. Das Befestigungselement 19 erstreckt sich derart durch die Befestigungsöffnung, dass das Lagerelement 5 mit dem Befestigungselement 19 zu einem Supportelement 20 klemmbar bzw. befestigbar ist. Hierfür weist das Supportelement 20 Aufnahmeöffnungen 21 auf, in welche das Befestigungselement eingreift. Das Supportelement 20 liegt typischerweise zwischen dem Lagerelement 5 und einem Spülkasten. Das Supportelement kann auch Teil eines Spülkastens sein.

### BEZUGSZEICH EN LISTE

- 1: Betätigungsvorrichtung
- 2: Betätigungsplatte
- 3: Betätigungselement
- 4: plattenseitige Befestigungsstruktur
- 5: Lagerelement
- 6: lagerelementseitige Befestigungsstruktur
- 7: Lagerlaschen
- 8: Befestigungsabschnitt
- 9: Lagerabschnitt
- 10: Seitenflächen
- 11: Lagerrahmen
- 12: Randstege
- 13: Rahmenöffnung
- 14: Endbereich
- 15: Frontseite
- 16: Stege
- 17: Rand
- 18: Befestigungsöffnung
- 19: Befestigungselement
- 20: Supportelement
- 21: Aufnahmeöffnung

- G: Gebäudewand
- F: Durchbruch
- W: Wandfläche

- D: Dicke
- B: Breite
- L: Länge

## Patentansprüche

1. Betätigungsvorrichtung (1) zum Auslösen einer Spülung eines Sanitärartikels, umfassend
eine Betätigungsplatte (2), die mindestens ein Betätigungselement (3) und mindestens eine plattenseitige Befestigungsstruktur (4) umfasst, und
ein Lagerelement (5), das mindestens eine lagerelementseitige Befestigungsstruktur (6) umfasst,
wobei die Betätigungsplatte (2) über die Verbindung der plattenseitigen Befestigungsstruktur (4) mit der lagerelementseitigen Befestigungsstruktur (6) zum Lagerelement (5) befestigbar ist, und
wobei das Lagerelement (5) mehrere seitlich vom Lagerelement (5) abstehende Lagerlaschen (7) umfasst, mit welchen das Lagerelement (5) an einer Wandfläche (W) einer Gebäudewand abgestützt werden kann bzw. abstützbar ist.

2. Betätigungsvorrichtung (1) nach Anspruch 1, **dadurch gekennzeichnet, dass** die Lagerlaschen (7) aus einem anderen Material als das Lagerelement (5) sind,
wobei die Lagerlaschen (7) über einen Befestigungsabschnitt (8) fest im Lagerelement (5) eingeformt bzw. angeformt sind und mit einem Lagerabschnitt (9) vom Lagerelement (5) abragen;
wobei die Lagerlaschen (7) über einen Befestigungsabschnitt (8) fest mit dem Lagerelement (5) verbunden sind und mit einem Lagerabschnitt (9) vom Lagerelement (5) abragen.

3. Betätigungsvorrichtung nach Anspruch 2, **dadurch gekennzeichnet, dass** der Befestigungsabschnitt (8) in einem Winkel winklig geneigt zum Lagerabschnitt (9) verläuft, wobei der Winkel zwischen 45° und 135°, insbesondere bei 90°, liegt; und/oder dass der Lagerabschnitt (9) länger als der Befestigungsabschnitt (8) ist.

4. Betätigungsvorrichtung (1) nach einem der vorhergehenden Ansprüche, **dadurch gekennzeichnet, dass** die Lagerlaschen (7) aus Metall, insbesondere in der Form eines Blechstreifens, oder aus einem faserverstärktem Kunststoff sind und dass das Lagerelement (5) aus Kunststoff ist.

5. Betätigungsvorrichtung (1) nach Anspruch 1, **dadurch gekennzeichnet, dass** die Lagerlaschen (7) einstückig am Lagerelement (5) angeformt sind, wobei Lagerlaschen (7) und Lagerelement (5) aus dem gleichen Material sind.

6. Betätigungsvorrichtung (1) nach einem der vorhergehenden Ansprüche, **dadurch gekennzeichnet,**
**dass** die Lagerlaschen (7) eine Dicke (D) im Bereich von 0.25 Millimetern bis 1 Millimetern, insbesondere im Bereich von 0.5 Millimetern bis 1 Millimetern aufweisen; und/oder
**dass** die Lagerlaschen (7) eine frei vom Lagerelement (5) wegstehende Länge (L) im Bereich von 5 Millimetern bis 20 Millimetern, insbesondere im Bereich von 10 Millimetern bis 15 Millimetern aufweisen; und/oder
**dass** die Lagerlaschen (7) eine Breite (B) im Bereich von 5 Millimetern bis 12 Millimetern, insbesondere im Bereich von 7 Millimetern bis 10 Millimetern aufweisen.

7. Betätigungsvorrichtung (1) nach einem der vorhergehenden Ansprüche, **dadurch gekennzeichnet, dass** die frei vom Lagerelement (5) wegstehende Länge der Lagerlasche (7) grösser ist als die Breite (B) der Lagerlasche (7), insbesondere, dass die frei vom Lagerelement (7) wegstehende Länge (L) der Lagerlasche (7) um einen Faktor im Bereich 1,2 bis 2,5 grösser ist als die Breite (B) der Lagerlasche (7).

8. Betätigungsvorrichtung (1) nach einem der vorhergehenden Ansprüche, **dadurch gekennzeichnet, dass** das Lagerelement (5) vier Seitenflächen (10) aufweist, wobei jeder Seitenfläche (10) mindestens eine Lagerlasche (7) zugeordnet ist, welche seitlich zu den Seitenflächen (10) gesehen vom Lagerelement (5) wegragen.

9. Betätigungsvorrichtung (1) nach einem der vorhergehenden Ansprüche, **dadurch gekennzeichnet, dass** das Lagerelement (5) ein Lagerrahmen (11) ist, welcher vier Randstege (12) aufweist, welche eine Rahmenöffnung (13) begrenzen, wobei von jedem der Randstege (12) mindestens eine Lagerlasche (7) absteht.

10. Betätigungsvorrichtung (1) nach Anspruch 8 oder 9, **dadurch gekennzeichnet, dass** pro Seitenfläche (10) bzw. pro Randsteg (12) jeweils zwei Lagerlaschen (7) vorhanden sind, wobei die Lagerlaschen (7) vorzugsweise in den Endbereichen (14) der Seitenflächen (10) bzw. der Randstege (12) liegen.

11. Betätigungsvorrichtung (1) nach Anspruch 9 oder 10, **dadurch gekennzeichnet, dass** pro Randsteg (12) jeweils zwei Lagerlaschen (7) vorhanden sind, wobei die Lagerlaschen (7) so angeordnet sind, dass die Lagerlaschen (7) jeweils eine Verlängerung des in die gleiche Richtung wie die Lagerlasche verlaufenden Randsteges (12) bilden.

12. Betätigungsvorrichtung (1) nach einem der vorhergehenden Ansprüche, **dadurch gekennzeichnet, dass** das Lagerelement (5) eine Frontseite (15) aufweist, wobei die Lagerlaschen (7) mit einem Überstand über der Frontseite (15) verlaufen, wobei der maximale Überstand vorzugsweise höchstens 3 Millimeter ist; oder dass sich die Lagerlaschen (7) aus den Seitenflächen (10) des Lagerelements (5) vom Lagerelement (5) weg erstrecken.

13. Betätigungsvorrichtung (1) nach einem der vorhergehenden Ansprüche, **dadurch gekennzeichnet, dass** das mindestens eine Betätigungselement (3) eine Betätigungstaste ist, welche bewegbar, insbesondere verschwenkbar in der Betätigungsplatte (2) gelagert ist; oder dass das mindestens eine Betätigungselement ein in der Betätigungstaste angeordnetes Sensorfenster ist, hinter welchem Sensorfenster ein Erfassungssensor zur Erfassung eines Benutzers anordbar ist.

14. Betätigungsvorrichtung (1) nach einem der vorhergehenden Ansprüche, **dadurch gekennzeichnet, dass** die lagerelementseitige Befestigungsstruktur (6) innerhalb der Seitenflächen (10), die das Lagerelement (5) seitlich begrenzen liegt.

15. Betätigungsvorrichtung (1) nach einem der vorhergehenden Ansprüche, **dadurch gekennzeichnet, dass** die Betätigungsplatte (2) eine Ausdehnung aufweist, welche derart ist, dass bei montierter Betätigungsplatte (2) das Lagerelement (5) und die Lagerlaschen (7) überdeckt, insbesondere vollständig überdeckt, sind.

16. Anordnung umfassend eine Gebäudewand (G) mit einem Durchbruch (B) und einer sich dem Durchbruch seitlich anschliessenden Wandfläche (W) und eine Betätigungsvorrichtung (1) nach einem der vorhergehenden Ansprüche, wobei die Lagerlaschen (7) auf der Wandfläche (W) aufliegen und wobei die Betätigungsplatte (2), bevorzugt abgesehen von der mindestens einen plattenseitigen Befestigungsstruktur (4) im Wesentlichen vollständig ausserhalb des Durchbruch (B) liegt.

17. Anordnung nach Anspruch 16, **dadurch gekennzeichnet, dass** das Lagerelement (5) abgesehen von den Lagerlaschen (7) im Wesentlichen vollständig im Wanddurchbruch (B) liegt.

18. Verfahren zur Herstellung eines Lagerelements (5) mit Lagerlaschen (7) einer Betätigungsvorrichtung (1) nach einem der Ansprüche 1 bis 15, **dadurch gekennzeichnet, dass** in einem ersten Schritt die Lagerlaschen (7) in einem Spritzgusswerkzeug platziert werden und dass in einem zweiten Schritt Kunststoff in das Spritzgusswerkzeug eingespritzt wird, welches das Lagerelement (5) formt.
